(19)

Europäisches
Patentamt
European
Patent Office
Office européen
des brevets

(11) **EP 1 802 064 B1**

(12) **EUROPEAN PATENT SPECIFICATION**

(45) Date of publication and mention
of the grant of the patent:
**04.06.2008 Bulletin 2008/23**

(51) Int Cl.:
*H04L 27/26* (2006.01) *H04L 5/02* (2006.01)

(21) Application number: **05292796.9**

(22) Date of filing: **22.12.2005**

(54) **OFDM coding using Hermite polynomials**

OFDM Kodierung unter Verwendung von Hermite-Polynomen

Codification OFDM à l'aide des polynômes de Hermite

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**27.06.2007 Bulletin 2007/26**

(73) Proprietor: **Alcatel Lucent
75008 Paris (FR)**

(72) Inventor: **Jaenecke, Peter
75334 Straubenhardt (DE)**

(74) Representative: **Schmidt, Werner Karl
ALCATEL
Intellectual Property Department Stuttgart
70430 Stuttgart (DE)**

(56) References cited:
- **WALTON M R; HANRAHAN H: "Hermite wavelets
for multicarrier data transmission"
PROCEEDINGS OF THE 1993 IEEE SOUTH
AFRICAN SYMPOSIUM ON COMMUNICATIONS
AND SIGNAL PROCESSING. COMSIG '93 (CAT.
NO. 93TH0546-2), 6 August 1993 (1993-08-06),
pages 40-45, XP002382229 New York, NY, USA**
- **HAAS R ET AL: "A TIME-FREQUENCY WELL-
LOCALIZED PULSE FOR MULTIPLE CARRIER
TRANSMISSION" WIRELESS PERSONAL
COMMUNICATIONS, SPRINGER, DORDRECHT,
NL, vol. 5, no. 1, July 1997 (1997-07), pages 1-17,
XP000619977 ISSN: 0929-6212**

Printed by Jouve, 75001 PARIS (FR)

## Description

The present invention relates to a method of coding data, wherein one or more data symbols are coded by using orthogonal frequency division multiplexing (OFDM).

The present invention further relates to a method of decoding a signal according to the preamble of claim 8 and to a transmitter as well as to a receiver.

Orthogonal frequency division multiplexing techniques are per se known and may particularly be used for coding and transmitting digital data. It is highly desirable to improve a spectral efficiency of the known techniques.

The document XP-002382229 discloses the usage of Hermite wavelets applied to multicarrier modulation systems. The performance of Hermite wavelet multicarrier modulation in a high-rate digital subscriber loop environment is evaluated and compared with that of sinusoidal multicarrier modulation by means of a detailed computer simulation.

The document XP-000619977 discloses a multicarrier transmission scheme and a design of a new pulse which minimizes intersymbol interference and interchannel interference.

Therefore, it is an object of the present invention to provide an improved method of coding data which enables to increase the spectral efficiency.

According to the present invention, this object is achieved by the following steps:

- using Hermite polynomials as an orthogonal function system for said orthogonal frequency division multiplexing, whereby an OFDM-signal is obtained,

- transforming said OFDM-signal into the time domain thus obtaining a time domain signal,

- performing a step of time division multiplexing (TDM) by combining said time domain signal with one or more further time domain signals, whereby a TDM-signal is obtained.

It has turned out that, when using Hermite polynomials as an orthogonal function system for coding data, a time domain signal which corresponds to an OFDM-signal so coded comprises long periods in which said time domain signal has a zero amplitude.

According to the present invention, said periods of zero amplitude of said time domain signal are exploited to add further information to said time domain signal, e.g. by combining one or more further time domain signals by means of a time division multiplexing scheme such that each of said distinct further time domain signals is placed within a range of said TDM-signal where every other time domain signal has an amplitude of zero or at least approximately a zero amplitude.

According to the present invention, said OFDM-signal is obtained according to the following equation:

$$S(f) = \sum_{n=1}^{N} d_n \cdot H_n(f) \cdot w(f) \,,$$

wherein N is the number of data symbols ($d_0$, $d_1$,..) to be coded, wherein $H_n$ is the Hermite polynomial of n-th order, and wherein $w(f)$ is a weighting function which depends on the frequency f.

Advantageously, said weighting function $w(f)$ depends on a Gaussian function, in particular

$$w(f) = e^{-\mu^2 \cdot f^2} \,,$$

wherein $\mu$ is a parameter, a value of which may be selected appropriately for a desired coding procedure.

For instance, by appropriately selecting said parameter $\mu$, it is possible to limit the bandwidth that is used by the OFDM-signal. Within multi-channel transmission systems, in which adjacent frequency channels comprise different OFDM-signals, $\mu$ may e.g. be chosen according to a predetermined adjacent carrier leakage power ratio, ACLR. Generally, by choosing a specific value of $\mu$, the shape of the spectral power density of the OFDM-signal may be influenced.

According to applicant's observations, even when limiting the OFDM-signal's bandwidth by introducing said Gaussian weighting function e.g. for fitting the OFDM-signal to a specific frequency channel, a substantial part of a time domain signal corresponding to said OFDM-signal obtained according to the present invention is characterized by amplitude values which are identical to zero. This enables to perform time division multiplexing and to correspondingly increase the spectral efficiency.

Although using a Gaussian weighting function is a particularly preferred embodiment of the present invention, it is also possible to use any other suitable weighting function.

A suitable weighting function in the sense of the present invention is considered to be a function which on the one hand enables to limit the bandwidth of the OFDM-signal, e.g. by cutting or attenuating the OFDM-signal depending on the frequency as described above. On the other hand, the weighting function should be chosen such that a decoding of the OFDM-signal by applying an orthogonality condition is still possible. Details of decoding are explained further below in the description.

Advantageously, a plurality of OFDM-signals obtained according to the method of the present invention is transformed into the time domain and after that combined via time division multiplexing to a TDM-signal.

Since each of the time domain signals corresponding to one of said OFDM-signals has large periods of zero amplitude, it is advantageously possible to combine those time domain signals by a time division multiplexing scheme without introducing any interference between the various time domain signals.

Thereby, it is possible to multiply the amount of information that is coded within the resulting TDM-signal as compared to prior art techniques which do not use Hermite polynomials for OFDM-coding and thus are not capable of time division multiplexing according to the inventive manner.

Consequently, the inventive combination of OFDM and TDM techniques, which is enabled by using Hermite polynomials as an orthogonal function system for said step of OFDM-coding, yields an increase of spectral efficiency when transmitting data which has been coded according to the present invention.

Although said one or more further time domain signals which are input to the time division multiplexing procedure are preferably obtained by transforming corresponding OFDM-signals to the time domain, another very advantageous embodiment of the present invention is characterized in that said one or more further time domain signals comprise control data and/or reference data, in particular for controlling a transmission of said TDM-signal.

Said control data or said reference data may e.g. comprise redundant information regarding an OFDM-signal which is to be transmitted, a reference data pattern which is both known in a transmitter and a receiver and the like.

According to another advantageous embodiment of the present invention, one or more of said further time domain signals are added in order to obtain said TDM-signal.

Preferably, an inverse fast Fourier transformation (iFFT) algorithm is used for transforming said OFDM-signals to the time domain.

The inverse Fourier transformation of the Hermite polynomials do advantageously have an analytic solution which enables to even further simplify the process of said inverse fast Fourier transformation thus increasing the efficiency of the inventive method.

A further solution to the object of the present invention is given by a method according to claim 8. Said method of decoding a TDM-signal which has preferably been obtained by the aforedescribed inventive method is characterized by the following steps:

- separating said one or more time domain signals from said TDM-signal,

- transforming at least one of said time domain signals to the frequency domain thereby recovering a corresponding OFDM-signal,

- applying an orthogonality condition to an OFDM-signal so recovered.

The separation of said one or more time domain signals from said TDM-signal may e.g. be achieved by appropriately sampling the TDM-signal or by further conventional techniques for demultiplexing TDM data.

The application of an orthogonality condition to a recovered OFDM-signal advantageously enables to recover data symbols which have previously been coded by using the Hermite polynomials as an orthogonal function system.

When decoding a TDM-signal which is obtained according to the inventive method, it is particularly useful to apply the following orthogonality condition:

$$\int_{-\infty}^{+\infty} df\, H_n(f) \cdot H_m(f) \cdot e^{-\mu^2 \cdot f^2} = c_{nm} \cdot \delta_{nm}.$$

$H_n$ and $H_m$ are Hermite polynomials of n-th and m-th order, respectively, $c_{nm}$ is a constant, and $\delta_{nm}$ is the Kronecker symbol.

When coding an OFDM-signal according to

$$S(f) = \sum_{n=1}^{N} d_n \cdot H_n(f) \cdot e^{-\mu^2 \cdot f^2} ,$$

the inventive application of said of orthogonality condition yields the above constant $c_{nm}$, which depends on the respective data symbol $d_n$ that has previously been OFDM-coded thus enabling to recover the value of said data symbol $d_n$.

Instead of using the Gaussian term $e^{-\mu 2 \cdot f2}$ for OFDM-coding and OFDM-decoding, it is also possible to use another weighting function $w(f)$, as long as the above orthogonality condition

$$\int_{-\infty}^{+\infty} df\, H_n(f) \cdot H_m(f) \cdot e^{-\mu^2 \cdot f^2} = c_{nm} \cdot \delta_{nm}$$

or a corresponding orthogonality condition

$$\int_{-\infty}^{+\infty} df\, H_n(f) \cdot H_m(f) \cdot w(f) = c'_{nm} \cdot \delta_{nm} ,$$

wherein $c'_{nm}$ is a further constant, is still satisfied or at least approximately satisfied.

Further advantageous solutions to the object of the present invention are given by a transmitter according to claim 10 and by a receiver according to claim 11.

Further applications, features and advantages of the present invention are described in the following detailed description with reference to the drawings, in which

Figure 1    depicts a simplified flow chart representing a first embodiment of the inventive method,

Figure 2    depicts a simplified block diagram of a transmission system comprising an inventive transmitter and an inventive receiver, and

Figure 3    depicts a portion of a time domain signal which corresponds to an OFDM-signal that has been obtained according to the present invention.

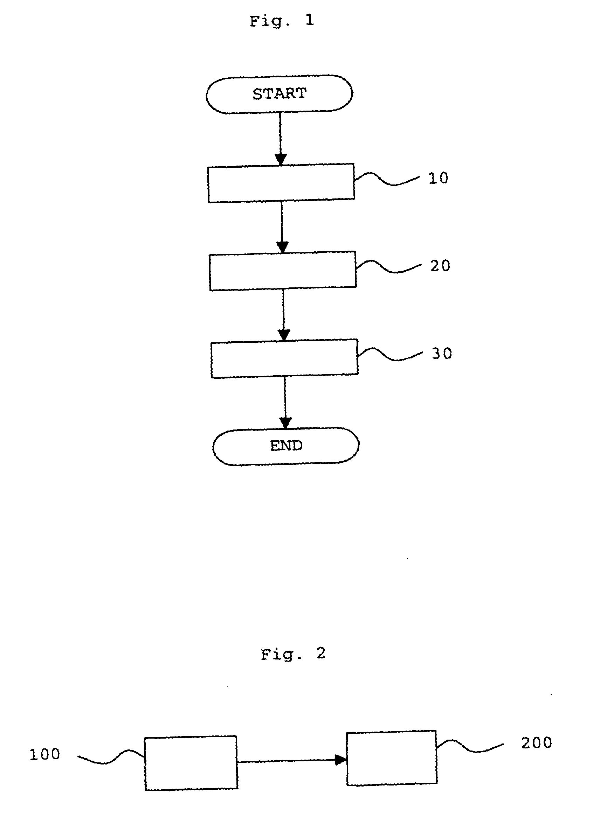

The simplified flow chart of Figure 1 depicts a first embodiment of the method according to the present invention.

First, within step 10, data symbols $d_0$, $d_1$,.. are coded by using orthogonal frequency division multiplexing, OFDM. According to the present invention, Hermite polynomials $H_n$ are advantageously used as an orthogonal function system for said orthogonal frequency division multiplexing. Said Hermite polynomials may e.g. be expressed as follows:

$$H_n(f) = (-1)^n e^{f^2} \frac{d^n}{df^n} e^{-f^2} .$$

The coding may e.g. performed according to

$$S(f) = \sum_{n=1}^{N} d_n \cdot H_n(f) \cdot w(f), \qquad \text{(equation 1)}$$

wherein N is the number of data symbols $d_0$, $d_1$, .. to be coded, wherein $H_n$ is the Hermite polynomial of n-th order, and wherein $w(f)$ is a weighting function which depends on the frequency f.

As can be gathered from equation 1, said OFDM-signal $S(f)$ can be interpreted as a weighted sum of said data

symbols $d_0$, $d_1$,.. to be coded, wherein a resulting weighting factor is the product of the respective Hermite polynomial $H_n$ and the weighting function $w(f)$.

According to the present invention, the so obtained OFDM-signal $S(f)$ is transformed into the time domain, cf. step 20 of Fig. 1, whereby a time domain signal $s(t)$ is obtained. Said process may e.g. be accomplished by an inverse fast Fourier transformation (iFFT).

If said weighting function $w(f)$ is chosen such that an inverse Fourier transform of the product of the Hermite polynomial $H_n$ and the weighting function $w(f)$, i.e. $H_n(f) \cdot w(f)$, has an analytic solution, the calculation of the time domain signal corresponding to the OFDM-signal $S(f)$ may even further be simplified.

After this, according to the present invention, a step 30 of time division multiplexing, TDM, is performed by combining said time domain signal $s(t)$ with one or more further time domain signals $S_1(t)$, $S_2(t)$, .. whereby a TDM-signal $s'(t)$ is obtained.

This is possible without substantially any interference between the various time domain signals $S(t)$, $S_1(t)$, $S_2$ $(t)$, .., because it has turned out that, when using Hermite polynomials as an orthogonal function system for coding data, a time domain signal which corresponds to an OFDM-signal so coded comprises long periods in which said time domain signal has a zero amplitude.

I.e., the inventive use of the Hermite polynomials $H_n$ enables to use TDM techniques and thus to increase the amount of data which can be coded by means of said TDM-signal with a given sample rate.

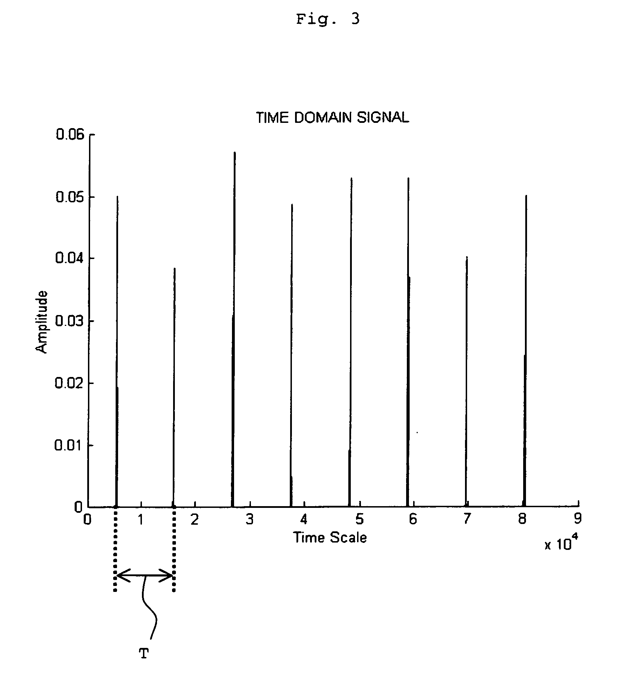

These advantageous properties of a time domain signal obtained by the inventive method are indicated by the portion of such a time domain signal which is depicted in Figure 3.

From Figure 3 it can be gathered, that an inventive time domain signal has substantial periods with zero amplitude, in which e.g. other time domain signals having a similar characteristic may be integrated to form said TDM-signal $s'(t)$. For instance, the period T marked with a double arrow in Figure 3 may be used for interlacing several time domain signals therein and thus correspondingly multiplying a respective data rate.

For instance, a plurality of OFDM-signals may be transformed to yield a corresponding time domain signal $S_1$ $(t)$, $S_2(t)$, .., which can be integrated into the TDM-signal $s'(t)$. Each of the respective OFDM-signals may depend on a certain number of coded data symbols.

In contrast to the present invention, conventional OFDM-coding techniques which are not based on Hermite polynomials $H_n$ do yield corresponding time domain signals which do not have substantial periods of zero amplitude and which do therefore not allow time multiplexing according to the inventive manner.

Alternative to solely combining "conventional" OFDM-signals or their time domain correspondences, respectively, it is also possible to integrate a special time domain signal into the TDM-signal $s'(t)$.

Said special time domain signal may e.g. not be a result of transforming an OFDM-signal to the time domain but may rather comprise control data or reference data assembled in the time domain so as to form said special time domain signal.

Said reference data may e.g. comprise redundant information as a backup to OFDM-coded data or, more generally, data which is both known in a transmitter transmitting the TDM-signal $s'(t)$ and in a receiver receiving said TDM-signal $s'(t)$ and which therefore allows for calibration, verification or measurements of communication channel properties or the like.

According to a further very advantageous embodiment of the present invention, said weighting function $w(f)$ depends on a Gaussian function, preferably in the following form:

$$w(f) = e^{-\mu^2 \cdot f^2} \, .$$

The Gaussian type weighting function has two advantageous effects. On the one hand, by appropriately selecting the parameter $\mu$, it is possible to limit the bandwidth that is used by the OFDM-signal $S(f)$, cf. equation 1. Within multi-channel transmission systems, in which adjacent frequency channels comprise different OFDM-signals, $\mu$ may e.g. be chosen according to a predetermined adjacent carrier leakage power ratio, ACLR. Generally, by choosing a specific value of $\mu$, the shape of the spectral power density of the OFDM-signal may be influenced.

According to applicant's observations, even when limiting the bandwidth of said OFDM-signal $S(f)$ by introducing said Gaussian weighting function e.g. for fitting the OFDM-signal $S(f)$ to a specific frequency channel of e.g. 5 MHz bandwidth, substantial periods of the time domain signal $s(t)$ corresponding to said OFDM-signal $S(f)$ obtained according to the present invention are characterized by amplitude values which are identical to zero, cf. e.g. Figure 3. This enables to perform said time division multiplexing, cf. step 30 of Figure 1, and to correspondingly increase the spectral efficiency.

Although using a Gaussian weighting function $w(f)$ is a particularly preferred embodiment of the present invention, it is also possible to use any other suitable weighting function.

A suitable weighting function $w(f)$ in the sense of the present invention is considered to be a function which on the one hand enables to limit the bandwidth of the OFDM-signal $S(f)$, e.g. by cutting or attenuating the OFDM-signal $S(f)$ depending on the frequency as described above. I.e., a suitable weighting function $w(f)$ has a non-constant value but rather depends on the frequency f.

On the other hand, the weighting function $w(f)$ should be chosen such that a decoding of the OFDM-signal $S(f)$ by applying an orthogonality condition is still possible.

In the case of the Gaussian-type weighting function

$$w(f) = e^{-\mu^2 \cdot f^2},$$

the corresponding orthogonality condition is

$$\int_{-\infty}^{+\infty} df \, H_n(f) \cdot H_m(f) \cdot e^{-\mu^2 \cdot f^2} = c_{nm} \cdot \delta_{nm}, \qquad \text{(equation 2)}$$

wherein $H_n$ and $H_m$ are Hermite polynomials of n-th and m-th order, respectively, and $c_{nm}$ is a constant, and $\delta_{nm}$ is the Kronecker symbol.

Applying said orthogonality condition of equation 2 to the OFDM-signal $S(f)$ that has been obtained according to equation 1 and using said Gaussian-type weighting function

$$w(f) = e^{-\mu^2 \cdot f^2},$$

yields the constant $c_{nm}$ during decoding, wherein said constant $c_{nm}$ depends on the respective data symbol $d_n$ that has been coded by means of equation 1.

However, prior to the aforedescribed step of decoding, the plurality of time domain signals $s(t)$, $S_1(t)$, $S_2(t)$, .., which are integrated into the TDM-signal $s'(t)$ via TDM, have to be separated from said TDM-signal $s'(t)$, which may e.g. be accomplished by sampling said TDM-signal $s'(t)$ in conformity with the TDM-scheme used for building the TDM-signal $s'(t)$.

After that, at least one of said time domain signals $s(t)$, $S_1(t)$, $S_2(t)$, .. is transformed to the frequency domain, e.g. by using a standard FFT algorithm, whereby a corresponding OFDM-signal is recovered.

The recovered OFDM-signal can hereafter be used with the orthogonality condition of equation 2 which leads to a constant that depends on the respective originally coded data symbol.

Further recovered OFDM-signals corresponding to said further time domain signals $S_1(t)$, $S_2(t)$, .. may be processed likewise thereby extracting all of the data symbols previously coded.

Control data or reference data or the like which may have been comprised within one or more of said further time domain signals $S_1(t)$, $S_2(t)$, .. may subsequently be evaluated.

Figure 2 shows a simplified block diagram which depicts a transmitter 100 and a receiver 200 according to the present invention.

The transmitter 100 is connected to the receiver 200 via a data link, cf. the arrow, which may e.g. be a radio channel or a cable connection or the like.

The transmitter 100 is configured to perform the above described inventive method of coding data by using Hermite polynomials, by applying a corresponding OFDM-coding to data symbols, and by applying time division multiplexing.

The receiver 200 is configured to perform at least the above described steps of decoding data that has been coded within said transmitter 100 according to the present invention.

Advantageously, both said transmitter 100 and said receiver 200 are equipped with some kind of calculating means (not shown) such as a digital signal processor (DSP) to provide the required signal processing capabilities.

Performing the inventive method by means of a DSP or other electronic calculating means necessitates a discrete processing of time and frequency values as well as data symbols. However, the inventive principle expressed in the description still applies.

The present invention may generally be employed in any system in which digital signals are transmitted. Possible fields of application are e.g.: transmissions via radio channels, particularly involving mobile terminals, digital subscriber line systems such HDSL, ADSL, or VHDSL, digital audio broadcasting (DAB) and high definition television (HDTV) terrestrial broadcasting.

**Claims**

1. Method of coding data, wherein one or more data symbols $d_0$, $d_1$, .. are coded by using orthogonal frequency division multiplexing, OFDM, comprising the following steps:

   - coding said one or more data symbols $d_0$, $d_1$, .. according to $S(f) = \sum_{n=1}^{N} d_n \cdot H_n(f) \cdot w(f)$, wherein N is the number of data symbols $d_0$, $d_1$,.. to be coded, wherein $H_n$ is the Hermite polynomial of n-th order, and wherein $w(f)$ is a weighting function which depends on the frequency f, whereby an OFDM-signal $(S(f))$ is obtained,
   - transforming said OFDM-signal $(S(f))$ into the time domain thus obtaining a time domain signal $(s(t))$,
   - performing a step of time division multiplexing, TDM, by combining said time domain signal $(s(t))$ with one or more further time domain signals $(S_1(t), S_2(t), ..)$, whereby a TDM-signal $(s'(t))$ is obtained, wherein said combining provides for integrating said one or more further time domain signals $(S_1(t), S_2(t), ..)$ within such portions of a period (T) of said time domain signals $(S(t))$, in which said time domain signal $(S(t))$ has a *zero*

2. Method according to claim 1, **characterized in that** said weighting function $w(f)$ depends on a Gaussian function, in particular $w(f) = e^{-u2 \cdot f2}$, wherein $\mu$ is a parameter that can be selected depending on a desired spectral power density for said OFDM-signal $(S(f))$.

3. Method according to one of the preceding claims, **characterized in that** said one or more further time domain signals $(S_1(t), S_2(t), ..)$ are obtained by transforming corresponding OFDM-signals to the time domain.

4. Method according to one of the preceding claims, **characterized in that** said one or more further time domain signals $(S_1(t), S_2(t), ..)$ comprise control data and/or reference data, in particular for controlling a transmission of said TDM-signal $(s'(t))$.

5. Method according to one of the preceding claims, **characterized by** using an inverse fast Fourier transformation, iFFT, algorithm for transforming said OFDM-signals to the time domain.

6. Method of decoding a TDM-signal $(s'(t))$ which has been obtained by the method according to one of the preceding claims, comprising the following steps:

   - separating said one or more further time domain signals $S_1(t)$, $S_2(t)$, .. from said TDM-signal $(S'(t))$,
   - transforming at least one of said time domain signals $(S(t), S_1(t), S_2(t), ..)$ to the frequency domain thereby recovering a corresponding OFDM-signal,
   - applying an orthogonality condition to said recovered OFDM-signal.

7. Method according to claim 6, **characterized in that** said orthogonality condition is

$$\int_{-\infty}^{+\infty} df \, H_n(f) \cdot H_m(f) \cdot e^{-\mu^2 \cdot f^2} = c_{nm} \cdot \delta_{nm} ,$$

wherein $H_n$ is the Hermite polynomial of n-th order, $c_{nm}$ is a constant and wherein $\delta_{nm}$ is the Kronecker symbol.

8. Transmitter (100) configured to perform the method according to any of the claims 1 to 5.

9. Receiver (200) configured to perform the method according to any of the claims 6 to 7.

**Patentansprüche**

1. Verfahren zur Codierung von Daten, in welchem ein oder mehr Datensymbole $d_0$, $d_1$, .. unter Verwendung des OFDM (Orthogonal Frequency Division Multiplexing) codiert sind, umfassend die folgenden Schritte:

    - Codieren eines oder mehr Datensymbole $d_0$, $d_1$, .. gemäß $S(f) = \sum_{n=1}^{N} d_n \cdot H_n(f) \cdot w(f)$, wo N - Anzahl der zu codierenden Datensymbole $d_0$, $d_1$,.., wo $H_n$ - Hermite-Polynom n-ter Ordnung, und wo w(f) - eine Bewertungsfunktion, die von der Frequenz f abhängig ist, wodurch ein OFDM-Signal $(S(f))$ erhalten wird,
    - Transformieren des OFDM-Signals $(S(f))$ in den Zeitbereich; folglich Erhalten eines zeitbereichssignals $(S(t))$,
    - Durchführen eines Schrittes des Zeitmultiplexverfahrens TDM durch Kombinieren des Zeitbereichssignals (s(t)) mit einem oder mehr weiteren Zeitbereichssignalen ($s_1$(t)), ($s_2$(t),..), wodurch ein TDM-Signal (s'(t)) erhalten wird, in welchem das Kombinieren das Integrieren eines oder mehr weiterer Zeitbereichssignale $(S_1(t))$, $(S_2(t),..)$ innerhalb solcher Zeitabschnitte (T) des zeitbereichssignals $(S(t))$ bereitstellt, in welchem das Zeitbereichssignal $(S(t))$ eine Nullamplitude aufweist.

2. Verfahren nach Anspruch 1, **dadurch gekennzeichnet, daß** die Bewertungsfunktion $w(f)$ von einer Gaußschen Funktion abhängig ist, insbesondere $w(f) = e^{\mu 2 f 2}$, wo $\mu$ ein Parameter ist, der in Abhängigkeit von einer gewünschten Spektralleistungsdichte für das OFDM-Signal $(S(f))$ ausgewählt werden kann.

3. Verfahren nach einem der vorhergehenden Ansprüche, **dadurch gekennzeichnet, daß** ein oder mehr weitere Zeitbereichssignale $(S_1(t))$, $(S_2(t),..)$ durch Transformieren der entsprechenden OFDM-Signale in den zeitbereich erhalten werden.

4. Verfahren nach einem der vorhergehenden Ansprüche, **dadurch gekennzeichnet, daß** ein oder mehr weitere Zeitbereichssignale $(S_1(t))$, $(S_2(t),..)$ Steuerdaten und/oder Referenzdaten umfassen, insbesondere zum Steuern einer Übertragung des TDM-Signals $(S'(t))$.

5. Verfahren nach einem der vorhergehenden Ansprüche, **gekennzeichnet durch** die Verwendung eines Algorithmus der inversen schnellen Fourier-Transformation iFFT zum Transformieren der OFDM-Signale in den Zeitbereich.

6. Verfahren zur Decodierung eines TDM-Signals $(S'(t))$, das durch das Verfahren nach einem der vorhergehenden Ansprüche erhalten wurde, umfassend die folgenden Schritte:

    - Trennen eines oder mehr weiterer Zeitbereichssignale $(S_1(t))$, $(S_2(t),..)$ vom TDM-Signal $(S'(t))$,
    - Transformieren mindestens eines der Zeitbereichssignale $(S(t)$, $S_1(t))$, $(S_2(t),..)$ in den Frequenzbereich, **dadurch** ein entsprechendes OFDM-Signal wiederherstellend,
    - Anwenden einer Orthogonalitätsbedingung auf das wiederhergestellte OFDM-Signal.

7. Verfahren nach Anspruch 6, **dadurch gekennzeichnet, daß** die Orthogonalitätsbedingung

    $\int_{-\infty}^{+\infty} df H_n(f) \cdot H_m(f) \cdot e^{\mu^2 f^2} = c_{nm} \cdot \square_{nm}$ ist, wo $H_n$- das Hermite-Polynom n-ter Ordnung, $C_{nm}$ - eine Konstante und wo $\square_{nm}$- das Kronecker-Symbol.

8. Sender (100), der konfiguriert ist, um das Verfahren nach jedem der Ansprüche 1 bis 5 durchzuführen.

9. Empfänger (200), der konfiguriert ist, um das Verfahren nach jedem der Ansprüche 6 bis 7 durchzuführen.

**Revendications**

1. Procédé de codification de données, dans lequel un ou plusieurs symboles de données $d_0$, $d_1$... sont codés en utilisant le multiplexage orthogonal par répartition en fréquences, OFDM, comprenant les étapes consistant à :

    - coder ledit ou lesdits symboles de données $d_0$, $d_1$,... selon la formule $S(f) = \sum_{n=1}^{N} d_n \cdot H_n(f) \cdot w(f)$, N étant le nombre de symboles de données $d_0$, $d_1$,... devant être codés, $H_n$ étant le polynôme de Hermite du n-ième ordre, et *w(f)* étant une fonction de pondération qui dépend de la fréquence f, moyennant quoi un signal OFDM *(S(f))* est obtenu,
- transformer ledit signal OFDM *(S(f))* en le domaine de temps pour obtenir ainsi un signal de domaine de temps *(S(t))*,
- effectuer une étape de multiplexage par répartition dans le temps, TDM, en combinant ledit signal de domaine de temps *(S(t))* avec un ou plusieurs autres signaux de domaine de temps *(s$_1$ (t), s$_2$ (t),...)* , moyennant quoi un signal TDM *(S'(t))* est obtenu, dans lequel ladite combinaison permet d'intégrer ledit ou lesdits autres signaux de domaine de temps $(S_1(t), S_2(t),...)$ dans de telles parties d'une période (T) dudit signal de domaine de temps *(S(t))*, dans lequel ledit signal de domaine de temps *(S(t))* a une amplitude zéro.

2. Procédé selon la revendication 1, **caractérisé en ce que** ladite fonction de pondération *w(f)* dépend d'une fonction de Gauss, en particulier $w(f) = e^{-\mu.2 \cdot j2}$, $\mu$ étant un paramètre pouvant être sélectionné en fonction d'une densité de puissance spectrale désirée pour ledit signal OFDM *(S(f))*.

3. Procédé selon l'une des revendications précédentes, **caractérisé en ce que** ledit ou lesdits autres signaux de domaine de temps $(S_1,(t), S_2(t),...)$ sont obtenus en transformant les signaux OFDM correspondants en le domaine de temps.

4. Procédé selon l'une des revendications précédentes, **caractérisé en ce que** ledit ou lesdits autres signaux de domaine de temps $(s, (t), s_x (t),...)$ comprennent des données de contrôle et/ou des données de référence, permettant en particulier de contrôler une transmission dudit signal TDM *(S(t))*.

5. Procédé selon l'une des revendications précédentes, **caractérisé par** l'utilisation d'une transformation de Fourier rapide inverse, iFFT, un algorithme permettant de transformer lesdits signaux OFDM en le domaine de temps.

6. Procédé de décodification d'un signal TDM *(S'(t))* qui a été obtenu par le procédé selon l'une des revendications précédentes, comprenant les étapes consistant à :

   - séparer ledit ou lesdits autres signaux de domaine de temps $(s_1(t)$, s$_2$ (t),...) dudit signal TDM *(S'(t))*,
   - transformer au moins un desdits signaux de domaine de temps $(S(t), S_1(t), S_2(t),...)$ en le domaine de fréquence pour récupérer ainsi un signal OFDM correspondant,
   - appliquer une condition d'orthogonalité audit signal OFDM récupéré.

7. Procédé selon la revendication 6, **caractérisé en ce que** ladite condition d'orthogonalité est

   $$\int_{-\alpha}^{+\alpha} df H_n(f) \cdot H_m(f) \cdot e^{-\mu^2 f^2} = c_{nm} \cdot \delta_{nm}, \quad H_n$$ étant le polynôme de Hermite du n-ième ordre, $c_{nm}$ étant une constante et $\delta_{nm}$ étant le symbole de Kronecker.

8. Emetteur (100) configuré pour réaliser le procédé selon l'une quelconque des revendications 1 à 5.

9. Récepteur (200) configuré pour réaliser le procédé selon l'une quelconque des revendications 6 à 7.

Fig. 1

Fig. 2

Fig. 3

TIME DOMAIN SIGNAL